# EUROPÄISCHE PATENTANMELDUNG

(11) **EP 2 765 499 A2**
(43) Veröffentlichungstag der Anmeldung: **13.08.2014**
(21) Anmeldenummer: 14154636.6
(22) Anmeldetag: 11.02.2014
(51) Int. Cl.: G06F 3/0488

(54) **Terminal für ein Verkehrsleitnetzwerk**

(30) Priorität: 11.02.2013 AT 501032013
(71) Anmelder: Frequentis AG, 1100 Wien (AT)
(72) Erfinder: Pestitschek, Wolfgang, 2604 Theresienfeld (AT)
(74) Vertreter: Wildhack & Jellinek

(57) **Zusammenfassung**

Die Erfindung betrifft ein Terminal (1) für ein Verkehrsleitnetzwerk, insbesondere für den Flugverkehr, das an eine zentrale Kommunikationseinheit (3) angeschlossen und/oder anschließbar ist und einen Touchscreen (2) aufweist zur Darstellung und Anwahl von Bedienelementen, insbesondere Buttons (7), an deren Berührung der Aufruf einer vorgegebenen, dem jeweiligen Button (7) zugeordneten Funktion geknüpft ist, insbesondere einer Funktion zum Empfang oder zum Absenden von Nachrichten von oder zur zentralen Kommunikationseinheit (3), wobei die anwählbaren, insbesondere verkehrsbezogenen, Funktionen auf dem Touchscreen (2) softwaremäßig, insbesondere auf den jeweils anfallenden Bedarf abgestimmt, angezeigt sind und die dem Button (7) zugeordnete Funktion durch Berühren des Buttons (7) anwählbar und/oder aktivierbar ist und die angewählte Funktion von einem dem Terminal (1) zugeordneten Terminalrechner (15) und/oder der zentralen Kommunikationseinheit (3) einleitbar und/oder abwickelbar ist. Erfindungsgemäß ist vorgesehen, dass der Terminalrechner (15) bei einer kurzen, eine vorgegebene Zeitspanne nicht überschreitenden Berührung eines der auf dem Touchscreen (2) dargestellten Buttons (7) die angewählte Funktion einleitet und/oder ausführt, und dass der Terminalrechner (15) bei einer eine vorgegebene Zeitspanne überschreitenden Berührung dieses Buttons (7) zusätzlich zu diesem berührten Button (7) zumindest einen weiteren oder eine vorgegebene Mehrzahl von anwählbare Funktionen darbietenden weiteren Buttons (8, 8', 8" ... 8ⁿ) am Touchscreen (2) darstellt.

## Beschreibung

Die Erfindung betrifft ein Terminal für ein Verkehrsleitnetzwerk gemäß dem Oberbegriff des Patentanspruchs 1. Entsprechend betrifft die Erfindung ein Terminal für ein Verkehrsleitnetzwerk, insbesondere für den Flugverkehr, das an eine zentrale Kommunikationseinheit angeschlossen und/oder anschließbar ist und einen Touchscreen aufweist zur Darstellung und Anwahl von Bedienelementen, insbesondere Buttons, an deren Berührung der Aufruf einer vorgegebenen, dem jeweiligen Button zugeordneten Funktion geknüpft ist, insbesondere einer Funktion zum Empfang oder zum Absenden von Nachrichten von oder zur zentralen Kommunikationseinheit, wobei die anwählbaren, insbesondere verkehrsbezogenen, Funktionen auf dem Touchscreen softwaremäßig, insbesondere auf den jeweils anfallenden Bedarf abgestimmt, angezeigt sind und die dem Button zugeordnete Funktion durch Berühren des Buttons anwählbar und/oder aktivierbar ist und die angewählte Funktion von einem dem Terminal zugeordneten Terminalrechner und/oder der zentralen Kommunikationseinheit einleitbar und/oder abwickelbar ist. Derartige Terminals kommen vor allem im Flugverkehr, im Eisenbahnverkehr und im Schiffsverkehr, vorzugsweise bei Sprachvermittlungssystemen, zum Einsatz. Im Flugverkehr dienen sie insbesondere für die Systemkommunikation im Boden-Luft- als auch im Boden-Boden-Kommunikationsverkehr.

Derartige Verkehrsleitnetzwerke werden vor allem für die Abwicklung des Flugverkehrs, aber auch für die Abwicklung von Schiff- und Bahnverkehr eingesetzt. Dabei wird das Verkehrsgeschehen von der zentralen Kommunikationseinheit überwacht und geregelt, an die eine Vielzahl von Terminals angeschlossen ist, die dezentral für das an einer Vielzahl von Orten erfolgende Verkehrsgeschehen zuständig sind. Beispielsweise sind derartige Terminals für Fluglotsen vorgesehen, die jeweils an eine zentrale Kommunikationseinheit angeschlossen sind, die den Sprechfunkverkehr mit an-oder abfliegenden Flugzeugen regelt, den Kontakt mit anderen Kommunikationseinheiten von anderen Flughäfen hält, Kontakt zu Wetterstationen hält und auch den Funkverkehr zwischen einzelnen Flugzeugen bzw. mit dem Tower abwickelt. Gleichzeitig wird noch eine Vielzahl von weiteren Funktionen abgewickelt, die direkt oder indirekt mit dem tatsächlichen Verkehrsaufkommen in Verbindung stehen.

Auf dem Bildschirm des Terminals, der von einem Touchscreen gebildet ist, werden der Bedienungsperson, insbesondere einem Fluglotsen, die ihm zur Verfügung stehenden Funktionen dargestellt. Es ist möglich, angezeigte und angebotene Funktionen durch Berührung des Touchscreens aufzurufen und abzuwickeln, durch die Anzeige anderer Funktionen zu ersetzen oder auszublenden. Durch die Berührung des Touchscreens können auch, abhängig vom Ort der Berührung, Funktionen zur Anzeige aufgerufen werden. Die Bedienungsperson nimmt über den Touchscreen die für die zentrale Kommunikationseinheit erforderlichen Bedienungshandlungen vor und überträgt an die Kommunikationseinheit entsprechende Nachrichten, Befehle, Signale, Daten, usw.; zudem kann die Kommunikationseinheit den Datenfluss entsprechend steuern. Gleichzeitig erhält die Bedienungsperson auch entsprechende Daten, Nachrichten usw. von der zentralen Kommunikationseinheit.

Es ist dabei von ganz besonderer Bedeutung, dass diese Nachrichtenübertragung höchste Sicherheit besitzt, um Unfälle und Schäden, insbesondere Personenschäden, weitgehend auszuschließen. Aufgrund des erhöhten Verkehrsaufkommens, insbesondere Flugaufkommens, in den letzten Jahren und die dadurch bedingten erhöhten Anforderungen an die Bedienungspersonen, stellen sich auch gestiegene Anforderungen an die Sicherheit der Kommunikation, insbesondere an die eingesetzten Sprachvermittlungssysteme. Es besteht somit die Forderung, dass neue Funktionen mit neuen Bedienungskonzepten technisch so gelöst werden müssen, dass maximale Sicherheit und intuitiver Workflow gegeben sind.

Vor allem besteht der Bedarf an möglichst sicheren und einfach bedienbaren Terminals, um die Arbeit der Lotsen zu erleichtern und deren Reaktionen rascher umsetzen zu können. Des Weiteren soll die Benutzeroberfläche sowohl den Bedürfnissen des Lotsen als auch den Bedürfnissen der jeweiligen Situation möglichst gut und rasch anpassbar sein. Die Gefahr, Funktionen am Touchscreen irrtümlich falsch zu bedienen, soll reduziert werden und die Arbeit des Lotsen effizienter gestaltet werden.

Aufgabe der Erfindung ist es, ein derartiges Terminal möglichst einfach im Hinblick auf seine Bedienung und gleichzeitig auch möglichst betriebssicher zu gestalten.

Diese Aufgabe wird bei einem Terminal der eingangs genannten Art dadurch erreicht, dass der Terminalrechner bei einer kurzen, eine vorgegebene Zeitspanne nicht überschreitenden Berührung eines der auf dem Touchscreen dargestellten Buttons die angewählte Funktion einleitet und/oder ausführt und dass der Terminalrechner bei einer eine vorgegebene Zeitspanne überschreitenden Berührung dieses Buttons zusätzlich zu diesem berührten Button zumindest einen weiteren oder eine vorgegebene Mehrzahl von anwählbare Funktionen darbietenden weiteren Buttons am Touchscreen darstellt.

Das erfindungsgemäße Terminal ermöglicht eine sichere Betätigung des Touchscreens und gestattet es dem Lotsen, sich auf die wesentlichen, für die jeweilige Situation erforderlichen Funktionen, die am Touchscreen dargestellt werden, zu konzentrieren. Die Änderung der auf dem Touchscreen dargestellten Funktionen erfolgt programmvorgegeben sehr rasch. Die darzustellenden, aufgerufenen Funktionen können von der zentralen Kommunikationseinheit vorgegeben bzw. an die Situation angepasst werden, ohne dass der Lotse selbst tätig werden muss. Das erfindungsgemäße Terminal zeigt ein kontext-sensitives Layout in einer optimalen Darstellung der zur Verfügung stehenden Funktionen und stellt ein dezentrales Element eines Verkehrsleitnetzwerks dar, das dem Lotsen essentielle Ressourcen, insbesondere für die Sprachvermittlung im Gesamtsystem zur Verfügung stellt. Es zeigte sich, dass eine beträchtliche Ersparnis der Head-Down-Time für typische Funktionsabläufe erreicht wird, d.h. die Zeit, die der Lotse braucht, um seine Kommunikation zu bedienen und die Kommunikationsabläufe abzuarbeiten, wird verringert und der Stress des Lotsen kann damit abgebaut werden.

Ein Vorteilhafter Aufbau eines erfindungsgemäßen Terminals ist dadurch gekennzeichnet, dass der Terminalrechner eine Zeitmesseinheit aufweist, die die Zeitdauer der Berührung eines Buttons ermittelt, dass ein Vergleicher vorgesehen ist, in dem die ermittelte Zeitdauer mit vorgegebenen Schwellwerten vergleichbar ist, und dass mit dem Vergleicher ein Funktionsspeicher des Terminalrechners ansteuerbar ist, der dem berührten Button zumindest einen weiteren Button, jeweils vorzugsweise eine Mehrzahl weiterer Buttons, mit entsprechend vorgegebener Funktion, zuordnet und am Touchscreen grafisch darstellt. Damit kann eine ausreichende Unterscheidung zwischen einer gewünschten Betätigung eines Buttons und einer gewünschten Anzeige von Funktionen unterschieden werden.

Um bei Nichtbedarf von dargestellten, angewählten Funktionen eine übersichtliche Darstellung zu erreichen, kann vorgesehen sein, dass der Terminalrechner eine Löscheinheit für den oder die zusätzlich dargestellte(n) weiteren Button(s) umfasst, die diese(n) weiteren Button(s) löscht bei:
a) Drücken eines mit den weiteren Buttons dargestellten Löschbuttons, oder
b) neuerliches Drücken des berührten Buttons, oder
c) Anwahl einer mit einem der weiteren Buttons dargestellten Funktion durch Berührung des weiteren Buttons oder
d) Änderung der dargestellten Seite des Touchscreens, oder
e) langes, eine vorgegebene Zeitspanne überschreitendes Berühren irgendeines Buttons, oder
f) Ablauf einer vorgegebenen Anzeigedauer.

Um die Übersichtlichkeit auf dem Touchscreen aufrecht zu erhalten und den berührten Button und die angewählten, zusätzlichen Funktionen ohne Beschränkung des Platzes anzeigen zu können, kann vorgesehen sein, dass der Terminalrechner die weiteren Buttons längs zwei oder drei Seitenrändern des berührten, vorzugsweise rechteckförmigen, Buttons darstellt oder angeordnet, wobei zumindest entweder der linke oder der rechte Rand oder Endbereich des berührten Buttons und/oder der obere oder der untere Rand oder Endbereich des berührten Buttons von weiteren Buttons freigestellt ist.

Bei in Eckbereichen des Touchscreens liegenden Buttons ist es vorteilhaft, wenn die angewählten und dargestellten Funktionen nur an den Rändern des berührten Buttons dargestellt werden, die nicht der jeweiligen Bildschirmberandung zugekehrt sind.

Um insbesondere im Bereich des linken oder rechten Bildrandes liegenden Buttons Funktionen zuordnen zu können, ohne dass die Übersichtlichkeit leidet, kann vorgesehen sein, dass durch Berühren von bezüglich einer vorgegebenen, vertikalen Trennlinie, vorzugsweise der vertikalen Bildsymmetralen des Touchscreens, links liegenden Buttons aufgerufene weitere Buttons den linken Begrenzungsrand oder Endbereich des berührten Buttons nicht überschreiten bzw. überragen und dass durch Berührung von bezüglich einer vorgegebenen, vertikalen Trennlinie, vorzugsweise der vertikalen Bildsymmetralen rechts liegenden Buttons aufgerufene weitere Buttons den rechten Begrenzungsrand des berührten Buttons nicht überschreiten bzw. überragen.

Zur Erhöhung der Sicherheit kann vorgesehen sein, dass für die Zeitdauer der Anzeige der weiteren Buttons die auf dem Touchscreen vorhandenen, nicht berührten Buttons für eine Aktivierung durch eine, eine vorgegebene Zeitspanne nicht überschreitende Berührung gesperrt sind, und/oder dass die Zeitmesseinheit die Zeitdauer zwischen aufeinanderfolgenden Berührungen von Buttons ermittelt und bei Unterschreiten eines vorgegebenen Werts eine nochmalige bzw. folgende Berührung nicht berücksichtigt oder als nicht erfolgt bewertet.

Ein erfindungsgemäßes Verfahren zur Anzeige von Funktionen auf einem Terminal für ein Verkehrsleitnetzwerk, insbesondere für den Flugverkehr, das an eine zentrale Kommunikationseinheit angeschlossen und/oder anschließbar ist und einen Touchscreen aufweist, auf dem Bedienungselemente in Form von Buttons dargestellt werden, bei deren Berührung bzw. Betätigung eine vorgegebene, dem jeweiligen Button zugeordnete Funktion aufgerufen wird, insbesondere Funktionen zum Empfang und zum Absenden von Nachrichten von und zur zentralen Kommunikationseinheit, wobei die anwählbaren, insbesondere verkehrsbezogenen, Funktionen auf dem Touchscreen softwaremäßig, insbesondere auf den jeweils anfallenden Bedarf abgestimmt, angezeigt werden, wobei die dem Button zugeordnete Funktion durch Berühren des Buttons angewählt und/oder aktiviert wird und die angewählte Funktion von einem dem Terminal zugeordneten Terminalrechner und/oder der zentralen Kommunikationseinheit eingeleitet und/oder ausgeführt wird, ist dadurch gekennzeichnet, dass bei einer kurzen, eine vorgegebene Zeitspanne nicht überschreitenden Berührung des auf den am Touchscreen grafisch dargestellten Buttons die angezeigte Funktion eingeleitet bzw. ausgeführt wird und dass bei einer eine vorgegebene Zeitspanne überschreitenden Berührung dieses Buttons zusätzlich zu diesem berührten Button zumindest ein weiterer oder eine vorgegebene Mehrzahl von auswählbare Funktionen darbietenden weiteren Buttons am Touchscreen dargestellt werden.

Letztlich betrifft die Erfindung auch einen Datenträger, auf dem ein Programm zur Durchführung des erfindungsgemäßen Verfahrens abgespeichert ist.

Die Erfindung wird im Folgenden anhand der Zeichnungen beispielsweise näher erläutert, in der ein Ausführungsbeispiel eines Touchscreens eines erfindungsgemäßen Terminals erläutert wird.

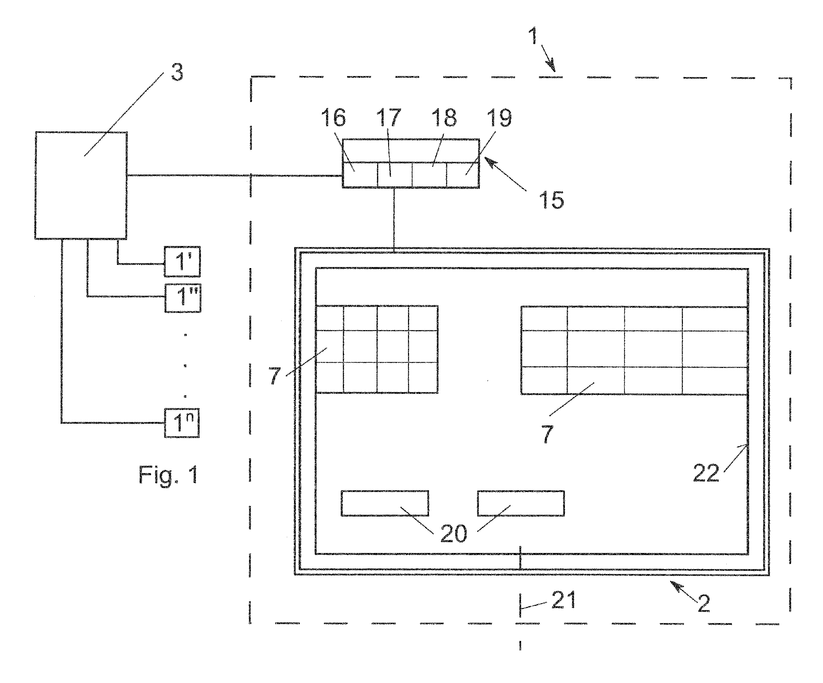

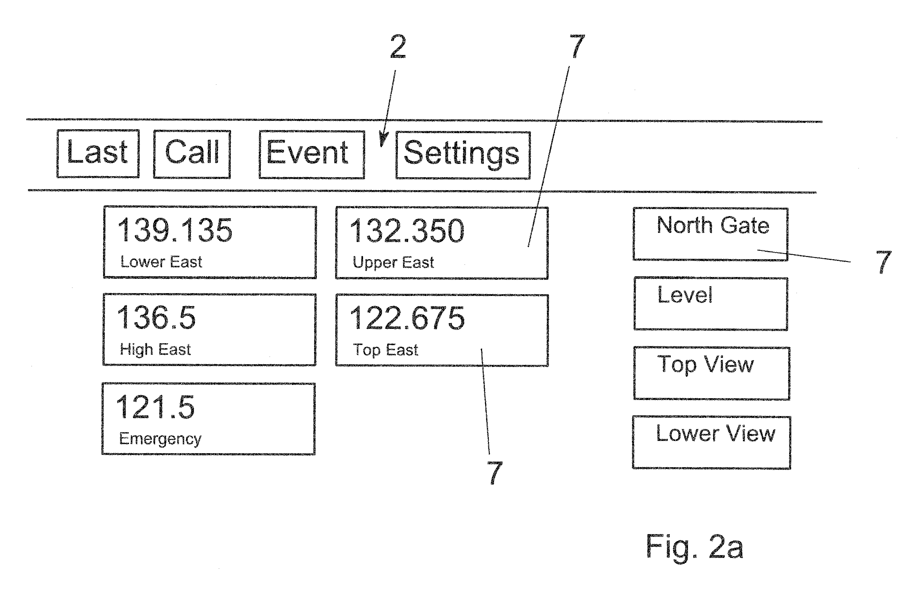

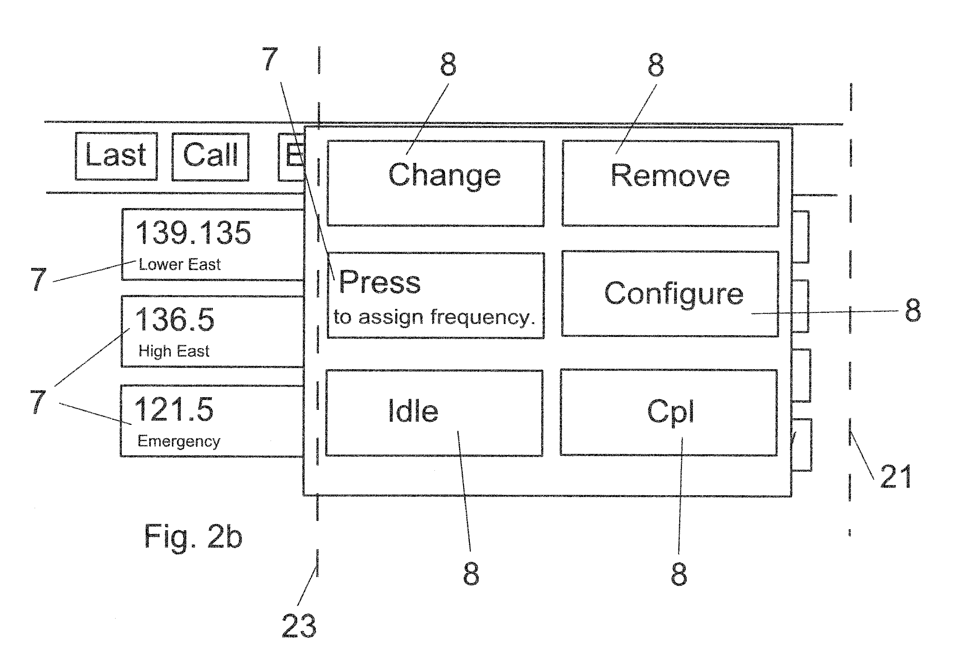

Fig. 1 zeigt eine schematische Ansicht eines Verkehrsleitungsnetzwerks mit einer besonderen Ausführungsform eines erfindungsgemäßen Terminals. Fig. 2a und 2b zeigen Detailansichten des dargestellten Bildschirminhalts eines Touchscreens eines Terminals.

Verkehrsleitnetzwerke besitzen in der Regel eine zentrale Kommunikationseinheit 3, an die eine Vielzahl von Terminals 1, 1', 1", ... 1ⁿ angeschlossen sind. Die Terminals 1 besitzen einen Touchscreen 2, der den Arbeitsplatz des jeweiligen Lotsen zugeordnet ist. Auf dem Touchscreen 2 werden Buttons 7 softwaremäßig dargestellt. In den Buttons 7 wird in der Regel grafisch die jeweilige Funktion dargestellt und zur Auswahl angeboten, die durch Berührung des Buttons 7 aufgerufen bzw. angewählt werden kann. Eine Berührung des Buttons 7 aktiviert die jeweilige Funktion, die sodann vom Terminalrechner 15 und/oder von der zentralen Kommunikationseinheit 3 ausgeführt wird.

Weitere Buttons bzw. Bedienfelder 20, z.B. für die Bedienung des Touchscreens 2, sind schematisch dargestellt.

Bei dem erfindungsgemäßen Terminal ist nunmehr vorgesehen, dass der Terminalrechner 15 bei einer kurzen, eine vorgegebene Zeitspanne nicht überschreitenden Berührung eines der auf dem Touchscreen 2 dargestellten Buttons 7 die angewählte Funktion einleitet bzw. ausführt. Bei einer eine vorgegebene Zeitspanne überschreitenden Berührung dieses Buttons 7 stellt der Terminalrechner 15 zusätzlich zu diesem berührten Button 7 zumindest einen weiteren oder eine vorgegebene Mehrzahl von anwählbare Funktionen darbietenden weiteren Buttons 8 am Touchscreen 2 dar.

Diesbezüglich wird nunmehr auf Fig. 2a verwiesen, in der ein Ausschnitt eines Touchscreens 2 dargestellt ist. Eine Anzahl von innerhalb eines am Touchscreen 2 durch den Bildrand 22 begrenzten Bildes liegenden Buttons 7 zeigt in entsprechender grafischer Darstellung anwählbare Funktionen, beispielsweise "Upper East", "Top East", "Level", usw. Diese Angaben umfassen z.B. anwählbare Frequenzen von Flugzeugen, Ortsangaben, usw. sowie Empfänger, mit denen ein Sprechfunkverkehr möglich ist.

Wird nunmehr einer dieser Buttons 7 länger als eine vorgegebene Zeitspanne berührt, so erscheint im Nahbereich des Buttons 7 bzw. den berührten Button 7 umgebend zumindest ein weiterer Button 8, vorteilhafterweise eine Anzahl von weiteren Buttons 8. Diese weiteren Buttons 8 enthalten Funktionen, die in vorbestimmter Weise dem berührten Button 7 zugeordnet sind. Diese Zuordnung erfolgt über die zentrale Kommunikationseinheit 3 und/oder über den Terminalrechner 15 oder durch Vorgabe des Lotsen. Im vorliegenden Fall sind die Funktionen dieser dargestellten weiteren Buttons 8 "Change", "Remove", "Configure", "CPL", "Idle". Alle diese Funktionen können nunmehr durch Berührung angewählt werden. Bei Berührung des weiteren Buttons 8 "Remove" werden alle weiteren Buttons 8 gelöscht und der ursprüngliche Zustand des Touchscreens 2 wiederhergestellt.

Damit wird bei größtmöglicher Sicherheit dem Lotsen die Möglichkeit geboten, sofort und unmittelbar auf weitere Buttons 8 bzw. Funktionen zurückgreifen zu können, die vorteilhafterweise in ursächlichem Zusammenhang mit dem von ihm berührten Button 7 stehen können. Dabei ist es auch möglich, dass die ursprünglich durch den Button 7 angebotene, dargestellte Funktion softwaremäßig überschrieben wird, um dem Lotsen auch für diesen Button 7 eine neue Funktion anzubieten und grafisch darzustellen.

Gemäß Fig. 1 ist ersichtlich, dass der Terminalrechner 15 eine Zeitmesseinheit 16 aufweist, die die Zeitdauer der Berührung eines Buttons 7 ermittelt.

Ferner ist ein Vergleicher 17 vorgesehen, in dem die ermittelte Zeitdauer mit vorgegebenen Schwellwerten vergleichbar ist.

Schließlich ist mit dem Vergleicher 17 ein Funktionsspeicher 18 des Terminalrechners 15 ansteuerbar ist, der dem berührten Button 7 zumindest einen weiteren Button 8, jeweils vorzugsweise eine Mehrzahl weiterer Buttons 8, mit entsprechend vorgegebener, dem jeweiligen weiteren Button 8 zugeordneter Funktion, zuordnet und am Touchscreen 2 grafisch darstellt.

Des Weiteren ist vorgesehen, dass der Terminalrechner 15 eine Löscheinheit 19 für den oder die zusätzlich dargestellte(n) weiteren Button(s) 8 umfasst, die diese(n) weiteren Button(s) 8 bei Vorliegen eines der folgenden Fälle löscht:
a) Drücken eines mit den weiteren Buttons 8 dargestellten Löschbuttons 8'
b) neuerlichem Drücken des berührten Buttons 7
c) Anwahl einer mit einem der weiteren Buttons 8 dargestellten Funktion durch Berührung des weiteren Buttons 8
d) Änderung der dargestellten Seite des Touchscreens 2
e) langes, eine vorgegebene Zeitspanne überschreitendes Berühren irgendeines Buttons 7, 8
f) Ablauf einer vorgegebenen Anzeigedauer.

Von Vorteil ist es, wenn der Terminalrechner 15 die weiteren Buttons 8 längs zwei oder drei Seitenrändern des berührten, vorzugsweise rechteckförmigen, Buttons 7 darstellt oder anordnet, wobei zumindest entweder der linke oder der rechte Rand oder Endbereich des berührten Buttons 7 und/oder der obere oder der untere Rand oder Endbereich des berührten Buttons 7 von weiteren Buttons 8 freigestellt ist.

Wie aus Fig. 2b ersichtlich ist, ist für einen am Touchscreen 2 links gelegenen Button 7 vorgesehen, dass der linke Rand des Buttons 7 von der Anzeige von zusätzlichen Buttons 8 freigehalten ist. Da es sich nicht um einen Button 7 handelt, der in der obersten, dem Bildschirmrand 22 nahen Reihe oder in der untersten, dem Bildschirmrand 22 nahen Reihe gelegen ist, sind die Buttons über drei Seiten um den Button 7 verteilt.

Bei Buttons 7, die im Eckbereich des Touchscreens 2 angeordnet sind, liegen die weiteren Buttons 8 lediglich auf den beiden Seiten des Buttons 7, welche dem Bildschirmrand 22 bzw. dem Darstellungsrand fern liegen, sodass die dargestellten Buttons 8 den jeweiligen Bildschirmrand 22 bzw. Darstellungsrand der Anzeige auf dem Touchscreen 2 nicht überschreiten. Damit bleibt der Rand, der auf dem Touchscreen 2 softwaremäßig dargestellten Darstellung unberührt und wird nicht nach außen hin überschrieben.

Es könnte als Regel gelten, dass durch Berühren von bezüglich einer vorgegebenen, vertikalen Trennlinie 21, vorzugsweise der vertikalen Bildsymmetralen des Touchscreens 2, links liegenden Buttons 7 aufgerufene weitere Buttons 8 den linken Begrenzungsrand 23 oder linken Endbereich des berührten Buttons 7 nicht überschreiten bzw. überragen und dass durch Berührung von bezüglich einer vorgegebenen, vertikalen Trennlinie 21, vorzugsweise der vertikalen Bildsymmetralen rechts liegenden Buttons 7 aufgerufene weitere Buttons 8 den rechten Begrenzungsrand des berührten Buttons 7 nicht überschreiten bzw. überragen.

Damit wird die Übersichtlichkeit auf dem Touchscreen 2 gewährleistet.

Zur Erhöhung der Sicherheit ist vorgesehen, dass für die Zeitdauer der Anzeige der weiteren Buttons 8 die auf dem Touchscreen 2 vorhandenen, nicht berührten Buttons 7 für eine Aktivierung durch eine, eine vorgegebene Zeitspanne nicht überschreitende Berührung gesperrt sind. Diese Funktion wird vom Terminalrechner 15 gewährleistet. Gleichzeitig kann der Terminalrechner 15 vorsehen, dass die Zeitmesseinheit 16 die Zeitdauer zwischen aufeinanderfolgenden Berührungen von Buttons 7, 8 ermittelt und bei Unterschreiten eines vorgegebenen Werts eine nochmalige bzw. folgende Berührung nicht berücksichtigt oder als nicht erfolgt bewertet.

Es ist möglich, dass der berührte Button nach seiner Berührung 7 in unveränderter Form dargestellt wird oder dass er z.B. vergrößert ist. Seine Lage am Touchscreen 2 bleibt jedoch unverändert oder wird nur geringfügig geändert. Seine grafische Gestaltung bzw. die Funktionsdarstellung könnte in vorgegebener Weise geändert werden.

## Patentansprüche

1. Terminal (1) für ein Verkehrsleitnetzwerk, insbesondere für den Flugverkehr, das an eine zentrale Kommunikationseinheit (3) angeschlossen und/oder anschließbar ist und einen Touchscreen (2) aufweist zur Darstellung und Anwahl von Bedienelementen, insbesondere Buttons (7), an deren Berührung der Aufruf einer vorgegebenen, dem jeweiligen Button (7) zugeordneten Funktion geknüpft ist, insbesondere einer Funktion zum Empfang oder zum Absenden von Nachrichten von oder zur zentralen Kommunikationseinheit (3), wobei die anwählbaren, insbesondere verkehrsbezogenen, Funktionen auf dem Touchscreen (2) softwaremäßig, insbesondere auf den jeweils anfallenden Bedarf abgestimmt, angezeigt sind und die dem Button (7) zugeordnete Funktion durch Berühren des Buttons (7) anwählbar und/oder aktivierbar ist und die angewählte Funktion von einem dem Terminal (1) zugeordneten Terminalrechner (15) und/oder der zentralen Kommunikationseinheit (3) einleitbar und/oder abwickelbar ist, **dadurch gekennzeichnet,**
- **dass** der Terminalrechner (15) bei einer kurzen, eine vorgegebene Zeitspanne nicht überschreitenden Berührung eines der auf dem Touchscreen (2) dargestellten Buttons (7) die angewählte Funktion einleitet und/oder ausführt, und
- **dass** der Terminalrechner (15) bei einer eine vorgegebene Zeitspanne überschreitenden Berührung dieses Buttons (7) zusätzlich zu diesem berührten Button (7) zumindest einen weiteren oder eine vorgegebene Mehrzahl von anwählbare Funktionen darbietenden weiteren Buttons (8, 8', 8" ... 8ⁿ) am Touchscreen (2) darstellt.

2. Terminal nach Anspruch 1, **dadurch gekennzeichnet, dass** der Terminalrechner (15) eine Zeitmesseinheit (16) aufweist, die die Zeitdauer der Berührung eines Buttons (7) ermittelt,
- dass ein Vergleicher (17) vorgesehen ist, in dem die ermittelte Zeitdauer mit vorgegebenen Schwellwerten vergleichbar ist, und
- dass mit dem Vergleicher (17) ein Funktionsspeicher (18) des Terminalrechners (15) ansteuerbar ist, der dem berührten Button (7) zumindest einen weiteren Button (8), jeweils vorzugsweise eine Mehrzahl weiterer Buttons (8), mit entsprechend vorgegebener Funktion, zuordnet und den weiteren Button (8) oder die weiteren Buttons (8) am Touchscreen (2) grafisch darstellt.

3. Terminal nach Anspruch 1 oder 2, **dadurch gekennzeichnet, dass** der Terminalrechner (15) eine Löscheinheit (19) für den oder die zusätzlich dargestellte(n) weiteren Button(s) (8) umfasst, die diese(n) weiteren Button(s) (8) löscht bei:
a) Drücken eines mit den weiteren Buttons (8) dargestellten Löschbuttons (8'), oder
b) neuerliches Drücken des berührten Buttons (7), oder
c) Anwahl einer mit einem der weiteren Buttons (8) dargestellten und/oder verknüpften Funktion durch Berührung des weiteren Buttons (8) oder
d) Änderung der dargestellten Seite des Touchscreens (2), oder
e) langes, eine vorgegebene Zeitspanne überschreitendes Berühren eines Buttons (7) oder eines weiteren Buttons (8), oder
f) Ablauf einer vorgegebenen Anzeigedauer durch automatische Löschung.

4. Terminal nach einem der Ansprüche 1 bis 3, **dadurch gekennzeichnet, dass** der Terminalrechner (15) die weiteren Buttons (8) längs zwei oder drei Seitenrändern des berührten, vorzugsweise rechteckförmigen, Buttons (7) darstellt oder anordnet, wobei zumindest entweder der linke oder der rechte Rand oder Endbereich des berührten Buttons (7) und/oder der obere oder der untere Rand oder Endbereich des berührten Buttons (7) von weiteren Buttons (8) freigestellt ist.

5. Terminal nach einem der Ansprüche 1 bis 4, **dadurch gekennzeichnet,**
- **dass** durch Berühren von bezüglich einer vorgegebenen, vertikalen Trennlinie (21), vorzugsweise der vertikalen Bildsymmetralen des Touchscreens (2), links liegenden Buttons (7) aufgerufene weitere Buttons (8) den linken Begrenzungsrand (23) oder Endbereich des berührten Buttons (7) nicht überschreiten und/oder überragen und
- **dass** durch Berührung von bezüglich einer vorgegebenen, vertikalen Trennlinie, vorzugsweise der vertikalen Bildsymmetralen des Touchscreens 2, rechts liegenden Buttons (7) aufgerufene weitere Buttons (8) den rechten Begrenzungsrand des berührten Buttons (7) nicht überschreiten und/oder überragen.

6. Terminal nach einem der Ansprüche 1 bis 5, **dadurch gekennzeichnet, dass** für die Zeitdauer der Anzeige der weiteren Buttons (8) die auf dem Touchscreen (2) vorhandenen, nicht berührten Buttons (7) für eine Aktivierung durch eine, eine vorgegebene Zeitspanne nicht überschreitende Berührung gesperrt sind.

7. Terminal nach einem der Ansprüche 1 bis 6, **dadurch gekennzeichnet, dass** die Zeitmesseinheit (16) die Zeitdauer zwischen aufeinanderfolgenden Berührungen von Buttons (7) und/oder weiteren Buttons (8) ermittelt und bei Unterschreiten eines vorgegebenen Werts eine nochmalige, erneute Berührung nicht berücksichtigt oder als nicht erfolgt bewertet.

8. Verfahren zur Anzeige von Funktionen auf einem Terminal (1) für ein Verkehrsleitnetzwerk, insbesondere für den Flugverkehr, das an eine zentrale Kommunikationseinheit (3) angeschlossen und/oder anschließbar ist und einen Touchscreen (2) aufweist, auf dem Bedienungselemente in Form von Buttons (7) dargestellt werden, bei deren Berührung oder Betätigung eine vorgegebene, dem jeweiligen Button (7) zugeordnete Funktion aufgerufen wird, insbesondere eine Funktion zum Empfang und zum Absenden von Nachrichten von und zur zentralen Kommunikationseinheit (3),
- wobei die anwählbaren, insbesondere verkehrsbezogenen, Funktionen auf dem Touchscreen (2) softwaremäßig, insbesondere auf den jeweils anfallenden Bedarf abgestimmt, angezeigt werden,
- wobei die dem Button (7) zugeordnete Funktion durch Berühren des Buttons (7) angewählt und/oder aktiviert wird, und
- wobei die angewählte Funktion von einem dem Terminal (1) zugeordneten Terminalrechner (15) und/oder der zentralen Kommunikationseinheit (3) eingeleitet und/oder ausgeführt wird, **dadurch gekennzeichnet,**
- **dass** bei einer kurzen, eine vorgegebene Zeitspanne nicht überschreitenden Berührung des auf den am Touchscreen (2) grafisch dargestellten Buttons (7) die angezeigte Funktion eingeleitet bzw. ausgeführt wird, und
- **dass** bei einer eine vorgegebene Zeitspanne überschreitenden Berührung dieses Buttons (7) zusätzlich zu diesem berührten Button (7) zumindest ein weiterer oder eine vorgegebene Mehrzahl von auswählbare Funktionen darbietenden weiteren Buttons (8, 8', 8", ... 8ⁿ) am Touchscreen (2) dargestellt werden.

9. Verfahren nach Anspruch 8, **dadurch gekennzeichnet,**
- **dass** die Zeitdauer der auf den jeweiligen Button (7) ausgeübten Berührung ermittelt und mit vorgegebenen Schwellwerten verglichen wird, und
- **dass** dem berührten Button (7), abhängig vom Vergleichsergebnis, aus einem Funktionsspeicher (18) zumindest einen weiteren Button (8), vorzugsweise eine Anzahl weiterer Buttons (8), jeweils mit entsprechend vorgegebener Funktion, zugeordnet und am Touchscreen (2) dargestellt wird.

10. Verfahren nach Anspruch 8 oder 9, **dadurch gekennzeichnet, dass** die weiteren Buttons (8) gelöscht werden bei:
a) Drücken eines mit dem(/n) zusätzlichen Button(s) (8) dargestellten Löschbuttons (8'), oder
b) neuerliches Drücken des ursprünglich berührten Buttons (7), oder
c) Anwahl einer mit einem der weiteren Buttons (8) dargestellten Funktion, oder
d) Änderung der Seite des Touchscreens (2), oder
e) langes, eine vorgegebene Zeitspanne überschreitendes Drücken irgendeines Buttons (7, 8), oder
f) Ablauf einer vorgegebenen Anzeigedauer.

11. Verfahren nach einem der Ansprüche 8 bis 10, **dadurch gekennzeichnet, dass** die weiteren Buttons (8) nur längs zwei oder drei Seiten des berührten, vorzugsweise rechteckförmigen, Buttons (7) dargestellt werden, wobei entweder die linke oder der rechte Begrenzungsrand (23) oder Endbereich des berührten Buttons (7) und/oder der obere oder untere Randbereich des berührten Buttons (7) von weiteren Buttons (8) freigestellt wird.

12. Verfahren nach einem der Ansprüche 8 bis 11, **dadurch gekennzeichnet,**
- **dass** über bezüglich einer vorgegebenen, vertikalen Trennlinie, vorzugsweise der vertikalen Bildsymmetralen, des Touchscreens (2) links liegende, berührte Buttons (7) aufgerufene weitere Buttons (8) die linke Begrenzung und/oder den linken Endbereich des berührten Buttons (7) nicht überschreiten und/oder überragen und
- **dass** über bezüglich einer vorgegebenen, vertikalen Trennlinie, vorzugsweise der vertikalen Bildsymmetralen, rechts liegende, berührte Buttons (7) aufgerufene weitere Buttons (8) die rechte Begrenzung und/oder den rechten Endbereich des berührten Buttons (7) nicht überschreiten und/oder überragen.

13. Verfahren nach einem der Ansprüche 8 bis 12, **dadurch gekennzeichnet, dass** während der Zeitdauer der Anzeige von aufgerufenen weiteren Buttons (8) die übrigen auf dem Touchscreen (2) vorhandenen Buttons (7), insbesondere für eine, eine vorgegebene Zeitspanne nicht überschreitende Berührung, gesperrt werden.

14. Verfahren nach einem der Ansprüche 8 bis 13, **dadurch gekennzeichnet, dass** die Zeitdauer zwischen aufeinanderfolgenden Berührungen von Buttons (7, 8) ermittelt und bei Unterschreiten eines vorgegebenen Werts eine nochmalige, erneute Berührung nicht berücksichtigt oder als nicht erfolgt bewertet wird.

15. Datenträger, auf dem ein Programm zur Durchführung eines Verfahrens gemäß einem der Patentansprüche 8 bis 14 abgespeichert ist.
